# EUROPEAN PATENT SPECIFICATION

(11) **EP 0 289 092 B1**
(45) Date of publication and mention of the grant of the patent: **07.04.1993**
(21) Application number: 88200806.3
(22) Date of filing: 26.04.1988
(51) Int. Cl.: A01F 15/08, A01F 15/00

(54) **Feed rolls for round baler net dispenser**
Förderrollen für Netzgewebespender in Rundballenpressen
Rouleaux d'alimentation pour distributeur de filet d'une presse à balles rondes

(30) Priority: 01.05.1987 US 45946
(43) Date of publication of application: 02.11.1988
(73) Proprietor: NEW HOLLAND BELGIUM N.V., B-8210 Zedelgem (BE)
(72) Inventor: Merritt III, John H., New Holland Pennsylvania 17557 (US)
(74) Representative: Vandenbroucke, Alberic

(56) References cited:
- DE-A- 2 419 097
- FR-A- 2 558 681
- US-A- 3 630 426
- US-A- 3 985 277

## Description

The present invention relates generally to round balers utilized for making cylindrical bales of crop material and, more particularly, to a dispensing device for selectively introducing wrapping material such as netting material into the round baler's bale forming mechanism so that the finished bales can be wrapped with an outer layer of wrapping material.

Net dispensing mechanisms for use in conjunction with round balers to wrap the exterior of a finished round bale with a layer of netting material is a relatively recent feature being incorporated into round balers. One such net dispensing device can be found on the Claas Model Rollant 44 round baler which utilizes a tray to physically hold a roll of netting material, the netting material being fed between a driven resilient feed roll and a rigid pinch roll by which means the netting can be fed into the bale chamber of the round baler for wrapping around a completed round bale therewithin. When the netting material is to be loaded into the net dispensing mechanism, it is necessary to disengage the pinch roll from the feed roll so that the netting material can be threaded therebetween. A reengagement of the pinch roll with the feed roll to pinch the netting material therebetween is necessary for a proper feeding of the netting material into the bale forming mechanism. A more detailed description of this prior art net dispensing device can be found with reference to, on the one hand, the detailed description of Fig. 6 and, on the other hand, FR-A-2.558.681.

It has been found that the combination of a driven feed roll and one pinch roll does not provide satisfactory feeding of the netting material into the bale forming mechanism.

Accordingly, it is the objective of this invention to provide a round baler with a wrapping material dispenser which provides a more positive feeding of the wrapping material into the bale forming mechanism.

According to the invention a round baler is provided having a bale forming chamber and wrapper means for selectively dispensing wrapping material from a wrapping material supply source into said chamber so that a finished bale in this chamber can be wrapped with said wrapping material; said wrapper means comprising:
- a drivable feed roll;
- pinching means which are movable away from the feed roll to facilitate the introduction of wrapping material therebetween and movable toward the feed roll to pinch said wrapping material therebetween and permit a feeding thereof into the bale forming chamber; and
- position control means including overcenter biasing means; said position control means being operatively connected to the pinching means to permit urging said pinching means into engagement with the feed roll and selectively moving these pinching means between engaged and disengaged positions; and
said baler being characterized in that
the pinching means comprise a pair of spaced apart pinch rolls of which, on the one hand, the first one is freely rotatably mounted, at one side of the feed roll, between transversely spaced apart mounting means which themselves are movably mounted on the baler frame and of which, on the other hand, the second one is freely rotatably journalled between a pair of pivot arms of which each one is pivotally connected to a corresponding one of said mounting means to permit movement of this second pinch roll relative to the feed roll and the first pinch roll; said second pinch roll being positioned at the side of the feed roll which is diametrically opposite to the side thereof at which the first pinch roll is provided and said pivot arms being connected to said position control means in a manner to permit effecting a pivotal movement of said pivot arms into a position in which the second pinch roll engages with the feed roll whereby any subsequent, further pivotal movement of the pivot arms also effects a displacement of the mounting means relative to the feed roll to also draw the first pinch roll into engagement therewith.

The invention is advantageous in that both pinch rolls can be selectively disengaged from the feed roll to permit the introduction of netting material therebetween on the one hand and in that the positional adjustment of the pinch rolls relative to the feed roll can be conveniently and easily accomplished to permit proper engagement of both pinch rolls with the feed roll to allow proper feeding of net therebetween on the other hand.

The advantages of this invention will become apparent upon consideration of the following detailed disclosure of this invention, especially when taken in conjunction with the accompanying drawings wherein :
Fig. 1 is a side elevational view of a round baler incorporating the principles of the instant invention, portions of the round baler being broken away to better show the invention;
Fig. 2 is a partial front elevational view of the round baler corresponding to lines II-II of Fig. 1, portions of the central part of the round baler being broken away for purposes of clarity;
Fig. 3 is an enlarged partial cross-sectional view taken along the lines III-III of Fig. 2 and showing the net dispensing apparatus; the movement of an overcenter linkage being shown in phantom;
Fig. 4 is a view similar to that of Fig. 3 with the pinch rolls being disengaged from the resilient feed roll; the movement of pinch roll mounting means and the pinch rolls being shown in phantom;
Fig. 5 is a view similar to that of Fig. 4 but showing the movement of a pivotally mounted pinch roll into engagement with the feed roll; the subsequent movement of the mounting means and the other pinch roll into engagement with the feed roll being shown in phantom; and
Fig. 6 is a schematic partial side elevational view of the net dispensing apparatus utilized on the Claas Model Rollant 44 round baler which is prior art to the instant invention.

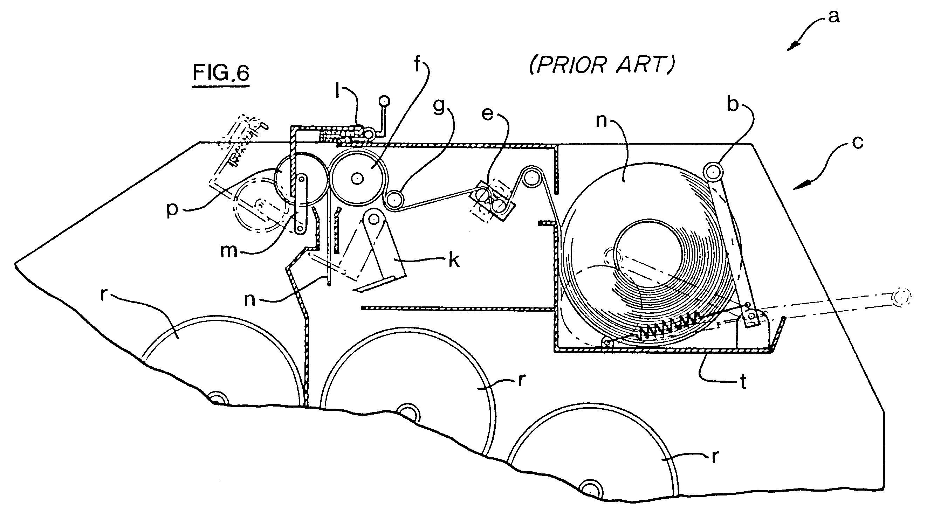

Referring first to Fig. 6, the Claas prior art net dispensing apparatus referred to above will be described now in greater detail. The round baler (a) is of the fixed chamber type with a plurality of rollers (r) journalled between opposing side sheets to form a chamber therebetween in which the cylindrical bale is formed. The net dispensing apparatus (c) includes a tray (t) in which a roll of netting material (n) is disposed. A braking bar (b) held into position by an overcenter spring, retains the roll of netting material (n) in position in the tray (t). The netting material is threaded through a pivotable braking apparatus (e), under a guide roll (g), around the feed roll (f), and between a pinch roll (p) and the feed roll (f). A swinging knife (k) is movable to engage the net between the feed roll (f) and the cylindrical bale to sever the net when a sufficient amount of net has been wrapped around the bale. The pinch roll (p) is mounted on pivot arms (m) equipped with a latching mechanism (l) to fixedly secure the pinch roll (p) against and into engagement with the feed roll (f).

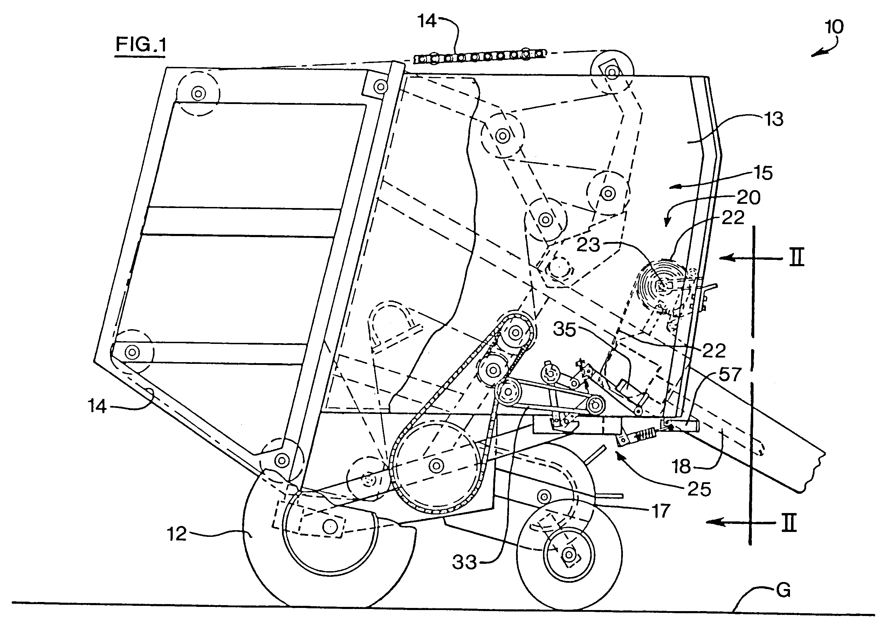

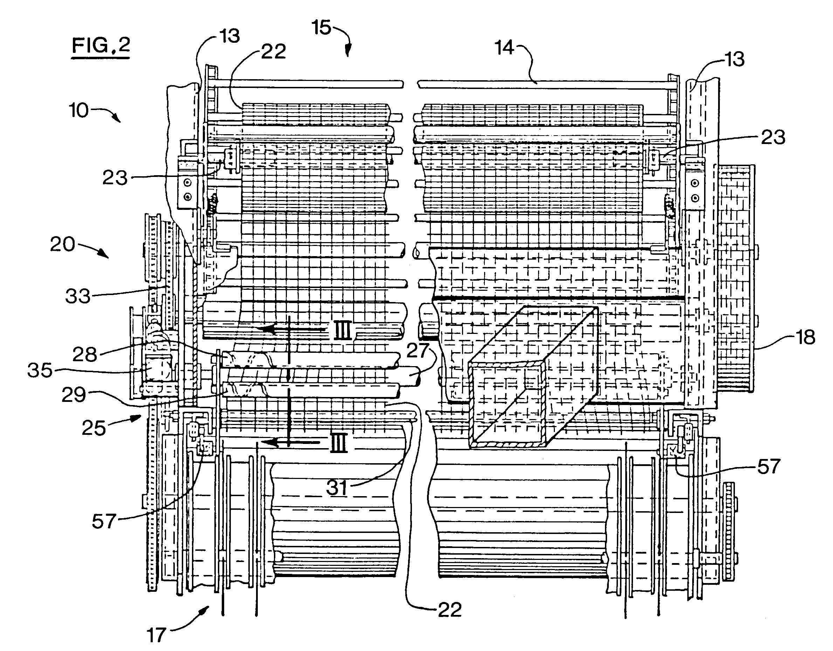

Referring now to the drawings and, particularly, to Figs. 1 and 2, side and front elevational views of a round baler incorporating the principles of the instant invention can be seen. Any left and right references are determined by standing at the rear of the machine and facing in the direction of operative travel. Also, terms such as "left", "right", "forward", "rearward", "transverse" etc.... are words of convenience and are not to be construed as limiting terms.

The round baler 10 is provided with a wheeled frame 12 and is adapted for movement over the ground G. The frame 12 supports a pair of generally vertical, transversely spaced apart side sheets 13 between which a chain and slat apron 14 is rotatably driven to form the bale forming mechanism 15 within which cylindrical bales of crop material are formed. A pickup 17 positioned adjacent the ground G delivers crop material from the ground G into the bale forming mechanism 15 in a conventional manner. A drive train 18 provides operational power to all the operable components within the round baler 10. This round baler 10, as described above, is of generally conventional construction and operation and is described in greater detail in US-A-4.426.833, the descriptive portion of which is incorporated herein by reference.

The round baler 10, however, has been modified to be equipped with a net dispensing apparatus 20. A roll of netting material 22 is mounted on a spindle 23 and rotatably journalled between the opposing side sheets 13 at a forward position of the round baler 10. The netting material 22 is threaded downwardly from the roll to a feeding mechanism 25 in the form of a feed roll 27 and first and second pinch rolls 28, 29. The net dispensing apparatus 20 also includes a pivoted knife assembly 31 used to sever the netting material 22 after a sufficient amount has been applied to the outer surface of the cylindrical bale, a drive mechanism 33 for operably powering the feed roll 27, and an actuating mechanism 35 for selectively engaging the drive 33 to effect a feeding of the netting material 22 into the bale forming mechanism 15. A more detailed description of the operation of the drive mechanism 33 and the actuating mechanism 35 can be found in the co-pending European patent application No. 0.293.025, entitled "Knife Assembly for Net Dispensing Apparatus".

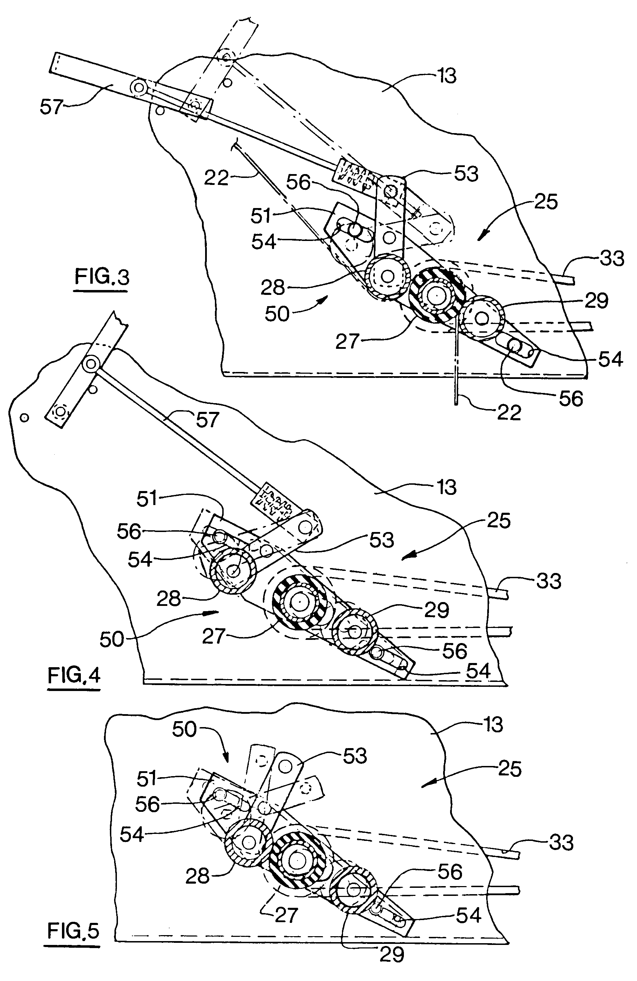

Referring now to Figs. 3-5, the feeding mechanism 25 can best be seen. The netting material 22 comes downward from the source of supply on the spindle 23 and is threaded between the pinch rolls 28, 29 and the resilient feed roll 27 to hang downwardly therefrom. When the feed roll 27 is operably driven, the netting material 22 is fed rearwardly together with the incoming crop material from the pickup 17 into the bale forming mechanism 15 where it will be wrapped around the cylindrical bale until the feed roll 27 is halted and the pivoted knife 31 moved into a position to sever the netting material 22.

The first pinch roll 29 is freely rotatably journalled on plates 51 on one side of the feed roll 27 and the second pinch roll 28 is freely rotatably mounted on pivot arms 53 which, in turn, are pivotally connected to the plates 51. Each plate 51 is provided with slot-shaped holes 54 formed therein and is mounted to a corresponding side sheet 13 by pins 56 extending therefrom through the respective slotted holes 54. An overcenter linkage 57 is accessible by the operator forwardly of the round baler 10 and is connected to each pivot arm 53 to effect movement thereof as indicated in phantom in Fig. 3.

As best seen in Fig. 5, actuation of the overcenter linkages 57 to effect pivotal movement of the corresponding pivot arms 53 and move the second pinch roll 28 into engagement with the feed roll 27 places the pinch roll mounting mechanism 50 into a position wherein further pivotal movement of the pivot arms 53 will cause the plates 51 to slide along the pins 56 until the first pinch roll 29 is firmly engaged on the opposing side of the feed roll 27. As best seen in Fig. 4, to permit a threading of a fresh supply of netting material 22 through the feed mechanism 25, the overcenter linkages 57 can be actuated to effect a pivotal movement of the pivot arms 53 to move the second pinch roll 28 away from the feed roll 27. Because of the partially vertical orientation of the slotted holes 54 through which the pins 56 are positioned, the plates 51 and mounted first pinch roll 29 should fall away from the feed roll 27 by gravity. If not, the first pinch roll 29 could easily be moved away by hand. After threading the netting material 22 between the pinch rolls 28, 29 and the feed roll 27, as shown in Fig. 3, the overcenter linkages 57 can be actuated to draw the pinch rolls 28, 29 into their engaged position with respect to the feed roll 27.

It will be understood that changes in the details, which have been described and illustrated to explain the nature of the invention, will occur to and may be made by those skilled in the art upon a reading of this disclosure.

As an example, it will be appreciated that the arrangement for wrapping netting material around bales as described hereabove equally well may be used for applying other wrapping material such as e.g. plastic film, to round bales. Accordingly, the invention is concerned, in more general terms, with a dispensing apparatus for a round baler and adapted to dispense any type of wrapping sheeting into the bale chamber.

Also, the position control means for the pinch rolls 28, 29 which, in the embodiment shown in the accompanying drawings and described hereabove, are formed by independent overcenter linkages 57 associated with corresponding plates 51 at the transversely opposite sides of the baler, alternatively may be formed by a single overcenter linkage similar to the structure 57 and which is coupled in a conventional manner to both plates 51 at the transversely opposite sides of the baler.

## Claims

1. A round baler (10) having a bale forming chamber and wrapper means (20) for selectively dispensing wrapping material (22) from a wrapping material supply source into said chamber so that a finished bale in this chamber can be wrapped with said wrapping material; said wrapper means (20) comprising:
- a drivable feed roll (27);
- pinching means (28, 29) which are movable away from the feed roll (27) to facilitate the introduction of wrapping material (22) therebetween and movable toward the feed roll (27) to pinch said wrapping material (22) therebetween and permit a feeding thereof into the bale forming chamber; and
- position control means including overcenter biasing means (57); said position control means being operatively connected to the pinching means (28, 29) to permit urging said pinching means (28, 29) into engagement with the feed roll (27) and selectively moving these pinching means (28, 29) between engaged and disengaged positions; and
said baler (10) being characterized in that
the pinching means comprise a pair of spaced apart pinch rolls (28, 29) of which, on the one hand, the first one (29) is freely rotatably mounted, at one side of the feed roll (27), between transversely spaced apart mounting means (51) which themselves are movably mounted on the baler frame (12, 13) and of which, on the other hand, the second one (28) is freely rotatably journalled between a pair of pivot arms (53) of which each one is pivotally connected to a corresponding one of said mounting means (51) to permit movement of this second pinch roll (28) relative to the feed roll (27) and the first pinch roll (29); said second pinch roll (28) being positioned at the side of the feed roll (27) which is diametrically opposite to the side thereof at which the first pinch roll (29) is provided and said pivot arms (53) being connected to said position control means (57) in a manner to permit effecting a pivotal movement of said pivot arms (53) into a position in which the second pinch roll (28) engages with the feed roll (27) whereby any subsequent, further pivotal movement of the pivot arms (53) also effects a displacement of the mounting means (51) relative to the feed roll (27) to also draw the first pinch roll (29) into engagement therewith.

2. A baler (10) according to claim 1, characterized in that each one of the transversely spaced mounting means is formed by a plate member (51) which is provided with slots (54) for mounting said plate member (51) on pins (56) connected to a corresponding baler frame side sheet (13) in a manner to permit sliding movement of said plate member (51) relative to said side sheet (13).

3. A baler (10) according to claim 2, characterized in that the slots (54) are oriented with at least a vertical component to permit gravity to urge the first pinch roll (29) away from the feed roll (27) when the position control means (57) are actuated to effect a disengagement of the second pinch roll (28) from the feed roll (27).

4. A baler (10) according to any of the preceding claims, characterized in that drive means (33) are associated with the feed roll (27) for driving the latter and, upon engagement of the pinch rolls (28, 29) with said feed roll (27), also driving these pinch rolls (28, 29).

## Patentansprüche

1. Rundballenpresse (10) mit einer Ballenformungskammer und Umwicklungseinrichtungen (20) zur selektiven Abgabe von Wickelmaterial (22) von einer Wickelmaterial-Vorratsquelle in die Kammer, so daß ein fertiggestellter Ballen in dieser Kammer mit dem Wickelmaterial umwickelt werden kann, wobei die Umwicklungseinrichtungen (20) folgende Teile umfassen:
- eine antreibbare Zuführungswalze (27),
- Klemmeinrichtungen (28,29), die von der Zuführungswalze (27) fort bewegbar sind, um die Einführung des Wickelmaterials (22) zwischen die Zuführungswalze und die Klemmeinrichtungen zu erleichtern, und die Richtung auf die Zuführungswalze (27) bewegbar sind, um das Wickelmaterial (22) zwischen der Zuführungswalze und den Klemmeinrichtungen einzuklemmen und um dessen Zuführung in die Ballenformungskammer zu ermöglichen, und
- Positionssteuereinrichtungen, die Endlagen-Vorspanneinrichtungen (57) einschließen, wobei die Positionssteuereinrichtungen betriebsmäßig mit den Klemmeinrichtungen (28,29) verbunden sind, um ein Andrücken der Klemmeinrichtungen (28,29) in Eingriff mit der Zuführungswalze (27) zu ermöglichen und um diese Klemmeinrichtungen (28,29) zwischen eingerückten und ausgerückten Positionen zu bewegen,
wobei die Ballenpresse (10) dadurch gekennzeichnet ist, daß:
- die Klemmeinrichtungen zwei mit Abstand voneinander angeordnete Klemmwalzen (28,29) umfassen, von denen einerseits die erste (29) frei drehbar an einer Seite der Zuführungswalze (27) zwischen einen Querabstand aufweisenden Befestigungseinrichtungen (51) befestigt ist, die ihrerseits beweglich auf dem Ballenrahmen (12,13) befestigt sind, und von denen andererseits die zweite Klemmwalze (28) frei drehbar zwischen zwei Schwenkarmen (53) gelagert ist, die jeweils schwenkbar mit einer entsprechenden der Befestigungseinrichtungen (51) verbunden sind, um eine Bewegung dieser zweiten Klemmwalze (28) gegenüber der Zuführungswalze (27) und der ersten Klemmwalze (29) zu ermöglichen, wobei die zweite Klemmwalze (28) an der Seite der Zuführungswalze (27) angeordnet ist, die diametral gegenüberliegend zu der Seite liegt, an der die erste Klemmwalze (29) angeordnet ist, und wobei die Schwenkarme (53) mit den Positionssteuereinrichtungen (57) derart verbunden sind, daß eine Schwenkbewegung der Schwenkarme (53) in eine Position bewirkbar ist, in der die zweite Klemmwalze (28) mit der Zuführungswalze (27) in Eingriff kommt, worauf irgendeine nachfolgende weitere Schwenkbewegung der Schwenkarme (53) weiterhin eine Bewegung der Befestigungseinrichtung (51) gegenüber der Zuführungswalze (57) bewirkt, um auch die erste Klemmwalze (29) in Eingriff mit dieser zu ziehen.

2. Ballenpresse (10) nach Anspruch 1,
dadurch **gekennzeichnet,** daß jede der einen Querabstand aufweisenden Befestigungseinrichtungen durch ein Plattenbauteil (51) gebildet ist, das mit Schlitzen (54) zur Befestigung des Plattenbauteils (51) auf mit einer entsprechenden Seitenplatte (13) des Ballenpressenrahmens verbundenen Stiften (56) derart versehen ist, daß eine Gleitbewegung des Plattenbauteils (51) gegenüber der Seitenplatte (13) ermöglicht wird.

3. Ballenpresse (10) nach Anspruch 2,
dadurch **gekennzeichnet,** daß die Schlitze (54) mit zumindestens einer vertikalen Komponente ausgerichtet sind, so daß die Schwerkraft die erste Klemmwalze (29) von der Zuführungswalze (27) fortbewegen kann, wenn die Positionssteuereinrichtungen (57) betätigt werden, um die zweite Klemmwalze (28) außer Eingriff mit der Zuführungswalze (27) zu bringen.

4. Ballenpresse (10) nach einem der vorhergehenden Ansprüche,
dadurch **gekennzeichnet**, daß Antriebseinrichtungen (33) der Zuführungswalze (27) zugeordnet sind, um diese anzutreiben und bei Eingriff der Klemmwalzen (28,29) mit der Zuführungswalze (27) auch diese Klemmwalzen (28,29) anzutreiben.

## Revendications

1. Ramasseuse-presse à balles rondes (10) équipée d'une chambre de formage de balles et de moyens d'enveloppement (20) destinés à délivrer sélectivement dans ladite chambre un matériau d'enveloppement (22) à partir d'une source d'alimentation de matériau d'enveloppement, afin qu'une balle finie dans ladite chambre puisse être enveloppée avec ledit matériau d'enveloppement; lesdits moyens d'enveloppement (20) comportant :
- un rouleau d'alimentation (27) apte à être entraîné;
- des moyens de pincement (28, 29) aptes à être déplacés à distance du rouleau d'alimentation (27) pour faciliter l'introduction du matériau d'enveloppement (22) entre eux, et en direction du rouleau d'alimentation (27) pour pincer ledit matériau d'enveloppement (22) entre eux et permettre une introduction de celui-ci dans la chambre de formage de balles; et
- des moyens de commande de position comprenant des moyens de sollicitation à détente brusque (57); lesdits moyens de commande de position étant reliés d'une manière fonctionnelle aux moyens de pincement (28, 29) pour pouvoir solliciter lesdits moyens de pincement (28, 29) afin de les amener en contact avec le rouleau d'alimentation (27), et pour pouvoir déplacer sélectivement ces moyens de pincement (28, 29) entre des positions en contact et hors de contact; et
ladite ramasseuse-presse (10) étant caractérisée en ce que
les moyens de pincement comportent deux rouleaux de pincement (28, 29) espacés l'un de l'autre dont le premier (29) est monté pour pouvoir tourner librement d'un côté du rouleau d'alimentation (27), entre des moyens de montage (51) espacés l'un de l'autre transversalement qui sont eux mêmes montés mobiles sur le châssis (12, 13) de la ramasseuse-presse, d'une part, et dont le second (28) est tourillonné pour pouvoir tourner librement entre deux bras pivotants (53) dont chacun est relié d'une manière pivotante à un moyen de montage correspondant desdits moyens de montage (51), afin de permettre un déplacement de ce second rouleau de pincement (28) par rapport au rouleau d'alimentation (27) et au premier rouleau de pincement (29), d'autre part; ledit second rouleau de pincement (28) étant positionné du côté du rouleau d'alimentation (27) diamétralement opposé au côté de celui-ci où est prévu le premier rouleau de pincement (29), tandis que lesdits bras pivotants (53) sont reliés auxdits moyens de commande de position (57) de manière à permettre l'exécution d'un mouvement de pivotement desdits bras pivotants (53) jusque dans une position dans laquelle le second rouleau de pincement (28) vient en contact avec le rouleau d'alimentation (27), afin qu'ainsi un mouvement de pivotement supplémentaire ultérieur des bras pivotants (53) provoque également un déplacement des moyens de montage (51) par rapport au rouleau d'alimentation (27) pour également tirer le premier rouleau de pincement (29), en vue de l'amener en contact avec celui-ci.

2. Ramasseuse-presse (10) selon la revendication 1, caractérisée en ce que chacun des moyens de montage espacés transversalement est formé par un élément formant plaque (51) pourvu de fentes (54) destinées à permettre le montage dudit élément formant plaque (51) sur des broches (56) reliées à une tôle latérale de châssis (13) correspondante de la ramasseuse-presse, de manière à permettre un mouvement de coulissement dudit élément formant plaque (51) par rapport à ladite tôle latérale (13).

3. Ramasseuse-presse (10) selon la revendication 2, caractérisée en ce que les fentes (54) sont orientées pour avoir au moins une composante verticale, afin que le premier rouleau de pincement (29) puisse être sollicité par gravité à distance du rouleau d'alimentation (27), lorsque les moyens de commande de position (57) sont actionnés pour effectuer une mise hors de contact du second rouleau de pincement (28) vis-à-vis du rouleau d'alimentation (27).

4. Ramasseuse-presse (10) selon l'une quelconque des revendications précédentes, caractérisée en ce que des moyens d'entraînement (33) sont associés au rouleau d'alimentation (27) pour entraîner ce dernier et pour, lors d'une mise en contact des rouleaux de pincement (28, 29) avec ledit rouleau d'alimentation (27), entraîner également ces rouleaux de pincement (28, 29).
